# FASCICULE DE BREVET EUROPEEN

(11) **EP 1 574 429 B1**
(45) Date de publication et mention de la délivrance du brevet: **24.11.2010**
(21) Numéro de dépôt: 05101757.2
(22) Date de dépôt: 07.03.2005
(51) Int. Cl.: B64D 27/26

(54) **Suspension d'un moteur à la structure d'un avion**
Vorrichtung für die Aufhängung eines Triebwerks an einer Flugzeugstruktur
Engine suspension device to an aircraft structure

(30) Priorité: 08.03.2004 FR 0402387
(43) Date de publication de la demande: 14.09.2005
(73) Titulaire: SNECMA, 75015 Paris (FR)
(72) Inventeur: Chevalier, Lydie Marie Hélène, 77150 Lesigny (FR); Tesniere, Marc Patrick, 91750 Champcueil (FR); Noirclerc, Gabriel, 92380 Garches (FR)
(74) Mandataire: David, Daniel

(56) Documents cités:
- EP-A- 0 249 553
- EP-A- 0 303 405
- EP-A- 0 744 338
- EP-A- 0 872 418

## Description

La présente invention concerne la suspension des moteurs de propulsion à la structure d'un avion.

Un moteur de propulsion, tel qu'un turboréacteur, peut être monté en divers endroits de l'avion en étant accroché à un mât ou un pylône appartenant à la structure de ce dernier. Il peut être suspendu sous la voilure, fixé au fuselage, généralement à l'arrière ou monté dans l'empennage par des moyens d'accrochage. Ces moyens d'accrochage ont pour fonction d'assurer la transmission des efforts mécaniques entre le moteur et la structure de l'avion. Les charges à prendre en considération sont orientées selon les trois directions principales d'un référentiel lié au moteur. Ce sont notamment le poids du moteur selon l'axe vertical Z, sa poussée selon l'axe X du moteur, et les charges aérodynamiques latérales selon l'axe Y transversal. Les charges à transmettre comprennent aussi la reprise du couple de rotation autour de l'axe du moteur. Ces moyens doivent en outre absorber, sans les transmettre au mât, les déformations subies par le moteur pendant les différentes phases du vol résultant par exemple des variations dimensionnelles dues aux dilatations ou contractions thermiques.

La liaison entre le moteur et le mât est assurée en général pour les moteurs à soufflante, par deux moyens de suspension, l'un à avant du moteur l'autre à l'arrière. Chacun des moyens de suspension est agencé pour transmettre une partie des efforts. Par exemple une des suspensions assure la reprise d'efforts latéraux selon l'axe Y et verticaux selon l'axe Z, ainsi que celle du couple moteur autour de l'axe X. L'autre reprend la poussée et également les efforts latéraux et verticaux.

Généralement un moyen de suspension comprend une poutre, éventuellement double, fixée au mât par des boulons et reliée au carter du moteur par des biellettes. Les biellettes tourillonnent à leurs extrémités sur des chapes ou pattes, selon le montage, solidaires respectivement du carter et de la poutre. Afin que la transmission des efforts par les biellettes soit purement axiale, on prévoit un palier à rotule pour les axes traversant, à chaque extrémité de ces dernières. Ce montage permet notamment d'absorber les dilatations radiales et axiales du moteur. On prévoit aussi des moyens de liaison avec jeu, dits en attente, qui deviennent actifs par réduction du jeu, si l'une des transmissions est défaillante par suite d'une rupture de pièce.

EP 0 872 418 A2, qui est considéré comme étant l'état de la technique le plus proche, montre une telle suspension de moteur.

Les brevets EP 1216921 ou FR 2820402 illustrent des modes d'accrochage de ce type.

Les poutres sont généralement assez massives et de forme complexe. Elles assurent la transition entre un plan horizontal de fixation au pylône et un plan vertical comportant des chapes pour la liaison au moteur. Dans le cas d'une suspension à une voilure l'encombrement en hauteur des poutres est tributaire de l'espace qu'il est nécessaire de réserver pour les boulons de fixation au pylône.

Par ailleurs un espace suffisant doit aussi être ménagé entre le carter et la poutre pour loger les biellettes et leur laisser un débattement suffisant.

La fixation de moteurs sur certaines parties de l'avion par exemple sur les ailes impose de réduire autant que possible l'encombrement de la suspension car l'espace disponible est assez réduit.

La demanderesse s'est donc fixé comme objectif la mise au point d'une suspension dont la hauteur est plus faible que celle connue de l'art antérieur.

L'invention a également comme objectif, la réalisation d'une suspension constituée de pièces dont les formes sont simples et de fabrication relativement peu onéreuse.

L'invention a également comme objectif la réalisation d'une suspension intégrant des moyens de sécurité assurant la reprise des efforts en cas de rupture partielle d'une pièce.

Conformément à l'invention on parvient à réaliser ces objectifs avec une suspension de moteur à la structure d'un avion, comportant au moins un moyen de liaison entre un premier et un deuxième éléments tels qu'un carter du moteur et ladite structure, caractérisée par le fait que ledit moyen de liaison comprend un organe excentrique, logé dans un alésage du premier élément en étant rotatif autour d'un premier axe, l'organe excentrique comportant un tourillon rattaché au deuxième élément et d'axe excentré par rapport au premier axe de rotation, l'organe excentrique étant rotatif autour dudit axe excentré.

Le premier ou deuxième élément peut être aussi une poutre ou toute autre pièce intermédiaire entre le carter et la structure.

L'organe excentrique est par exemple en forme de disque monté par l'intermédiaire d'un palier dans l'alésage, et de préférence le tourillon est monté sur le disque.

La suspension objet de la revendication peut être appliquée aussi bien à l'avant du moteur qu'à l'arrière. En remplaçant la liaison par bielle entre les deux éléments par une liaison avec un organe de type excentrique, on peut réaliser un montage plus compact, puisque la liaison, avec ses deux degrés de liberté au moins, peut être logée à l'intérieur du contour de l'un des éléments. Ainsi on réduit de plusieurs centimètres l'encombrement en hauteur de la suspension sans perdre en mobilité radiale. On peut augmenter la garde au sol de l'ensemble rotatif ou réserver un espace pour la mise en place d'élastomères d'amortissement.

Ce nouveau moyen de liaison peut être appliqué largement.

Conformément à un mode de réalisation, on applique l'invention à la liaison entre le carter du moteur et une poutre. Le moyen de liaison comprend au moins un organe excentrique et un axe distant dudit organe excentrique tourillonnant entre le carter et la poutre. On assure ainsi la reprise des efforts verticaux et latéraux ainsi que celle du couple moteur, tout en autorisant la dilatation libre du carter du moteur.

Selon une variante de ce mode de réalisation, le moyen de liaison comprend au moins un premier et un deuxième organes excentriques. De préférence, il en comprend trois dans ce mode de réalisation pour la reprise du couple moteur. Une telle liaison trouve alors une application avantageuse en tant que suspension du moteur à l'avant entre la structure de l'avion et le carter intermédiaire ou bien à l'arrière.

Conformément à une autre caractéristique, le moyen de l'invention forme une liaison entre la poutre et la structure de l'avion. Il comprend un organe excentrique de structure et un axe distant dudit organe excentrique de structure tourillonnant entre la poutre et la structure. Comme dans la solution précédente pour la liaison entre le carter et la poutre, ce moyen de liaison permet à la fois la reprise des efforts verticaux et latéraux et celle du couple moteur, tout en autorisant les variations dimensionnelles radiales entre la poutre et la structure de l'avion..

Selon une variante, le moyen de liaison de la poutre à la structure de l'avion comprend au moins un premier et un deuxième organes excentriques de structure

Dans ce mode de réalisation, la suspension du moteur à la structure de l'avion, de préférence, comprend un moyen de liaison entre le carter et la poutre et un moyen de liaison entre la poutre et la structure.

Avantageusement, le disque d'au moins l'un desdits organes excentriques est monté dans son logement sur l'élément par le moyen d'un palier formant une rotule ou bien le tourillon d'axe excentré d'au moins l'un des disques est monté dans l'organe excentrique par le moyen d'un palier formant rotule. De préférence, au moins l'un desdits axes distants est monté aussi dans son logement par le moyen d'un palier formant rotule.

Cette fonction de rotule est obtenue par exemple par un montage du tourillon sur son organe excentrique dans un palier logé dans une cage à surface sphérique formant rotule, comme cela est connu de l'homme du métier. Cette fonction de rotule peut aussi être obtenue par un montage de l'organe excentrique dans un palier à surface sphérique.

Conformément à un mode réalisation particulier, on confère à l'organe excentrique une double fonction rotule en ménageant une rotule à la fois pour le tourillon et pour le disque rotatif. On assure ainsi une liberté de rotation selon un angle important.

De préférence l'axe distant est monté également dans un palier formant rotule. Ce mode de réalisation permet d'absorber les dilatations ou contractions axiales du carter pendant les phases transitoires de fonctionnement du moteur. En particulier, dans le premier mode de réalisation, par la disposition semblable de la poutre avec la structure du moteur, on permet par les mouvements combinés de la poutre par rapport au carter du moteur et de la poutre par rapport à la structure de l'avion d'absorber efficacement les dilatations ou les déplacements axiaux du moteur par rapport à la structure de l'avion.

De préférence encore, on prévoit que l'un des axes ou tourillons peut coulisser par rapport à l'un des éléments : carter, poutre ou structure. On assure ainsi que les efforts impliquant une rotation du carter du moteur autour de l'axe vertical Z ne sont pas transmis, et un montage intégralement isostatique.

Conformément à une autre caractéristique, la suspension comprend un premier organe de liaison en attente entre la poutre et le carter du moteur disposé entre le premier et le deuxième tourillons.

Conformément à une autre caractéristique la suspension comprend un deuxième et un troisième organes de liaison en attente entre la poutre et la structure de l'avion.

De préférence les organes de liaison en attente sont formés par un tourillon logé dans un alésage avec un jeu déterminé. Selon un mode de réalisation au moins l'un des axes ou tourillons est monté dans son palier en étant mobile axialement.

D'autres caractéristiques et avantages apparaîtront à la lecture de la description qui suit d'un mode de réalisation non limitatif de l'invention, accompagnée de dessins sur lesquels
- la figure 1 représente une suspension d'un moteur à un pylône d'avion avec ses attaches avant et arrière,
- la figure 2 montre une suspension conforme à un premier mode de réalisation de l'invention,
- la figure 3 montre une vue de la figure 2 en coupe selon la direction 3-3,
- la figure 4 montre une vue de la figure 2 en coupe selon la direction 4-4,
- la figure 5 montre la poutre de la suspension selon le premier mode de réalisation de l'invention seule,
- les figures 6A1 et 6B1 montrent de face une partie de la suspension selon le premier mode de réalisation en position moteur froid et moteur chaud,

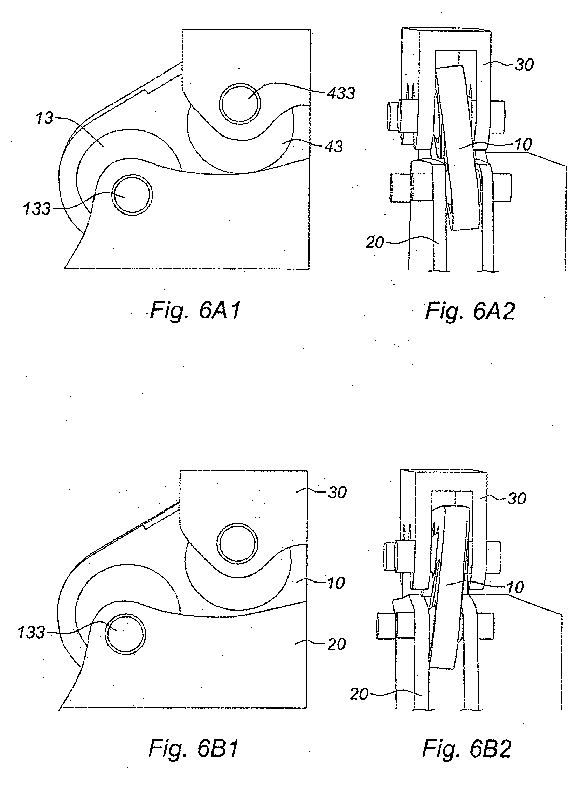

- les figures 6A2 et 6B2 montrent vue de côté la partie de la suspension selon le premier mode de réalisation en position moteur froid et moteur chaud,

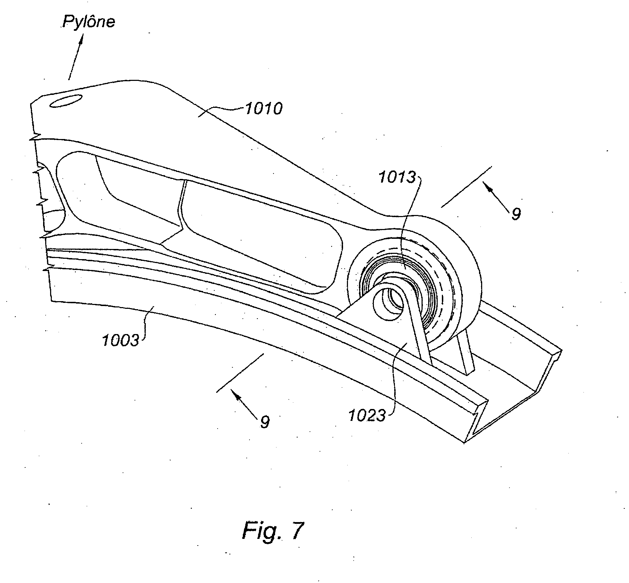

- la figure 7 montre, vu en perspective, un deuxième mode de réalisation de l'invention,

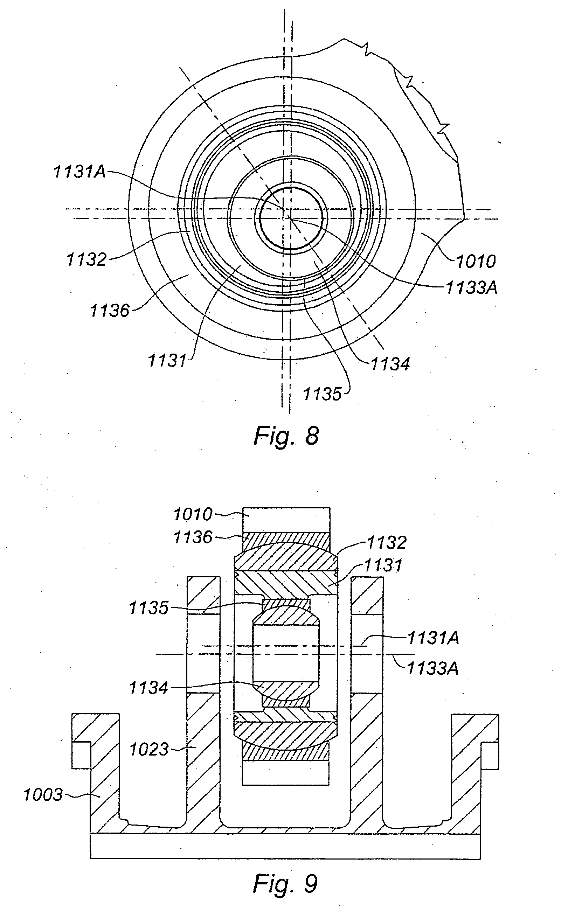

- la figure 8 montre l'organe excentrique de la figure 7, vu de face,
- la figure 9 montre une coupe selon la direction 9-9 de la figure 7.

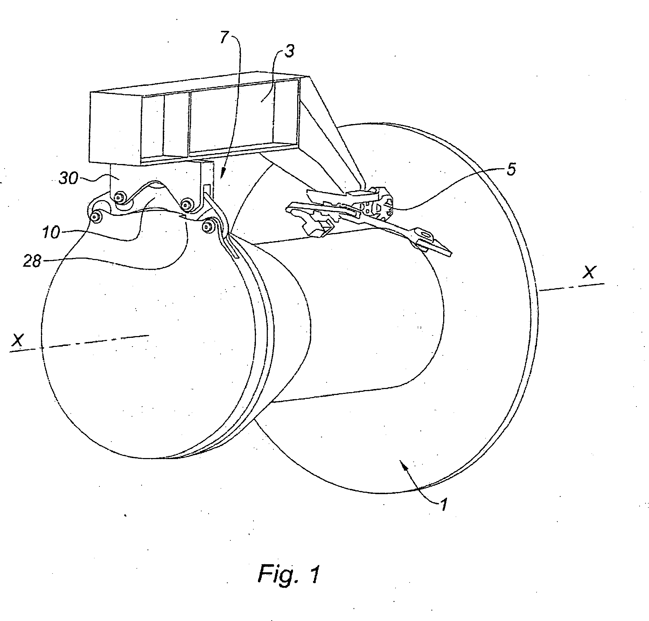

On a représenté sur la figure 1 de façon très schématique un turboréacteur 1 suspendu à un pylône 3 qui fait partie de la structure de la voilure d'un avion et qui n'est pas visible. La suspension comprend généralement une attache avant 5 au niveau du carter intermédiaire de soufflante, et une attache arrière 7 au niveau du carter d'échappement. Les deux carters sont des éléments structuraux du moteur par lesquels passent les efforts mécaniques entre la structure de l'avion et le moteur.

L'invention telle qu'illustrée dans la description du premier mode de réalisation qui suit est appliquée à l'attache arrière, mais elle trouverait aussi une application à l'attache avant ou autre.

La suspension 7 comprend une poutre 10 interposée transversalement à l'axe X du moteur 1, entre la ferrure 20 ici solidaire du carter de turbine, et la base 30 du pylône.

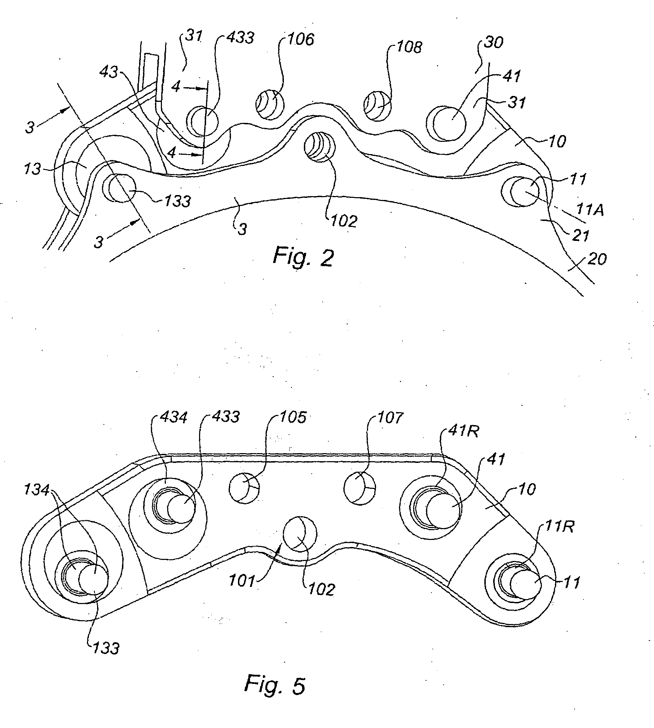

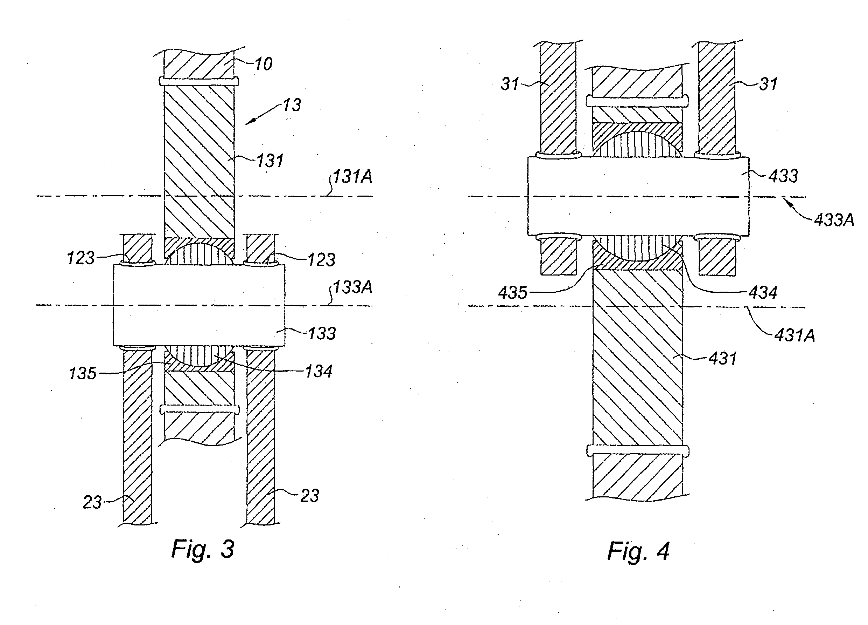

On décrit plus en détail la suspension en se reportant aux figures 2 à 5. La poutre 10 a une forme générale ici en arc de cercle avec un moyen de fixation à la ferrure du carter 20 qui est elle-même en forme d'arc de cercle et perpendiculaire à l'axe du moteur. Cette ferrure forme deux chapes 21 et 23 radiales, distantes l'une de l'autre sur l'arc de cercle avec des alésages et des paliers pour recevoir deux tourillons ou axes. Le moyen de liaison d'un premier élément tel que la poutre 10 à un deuxième élément tel que le carter 20 comprend un organe excentrique 13 à une extrémité de la poutre 10 et un axe 11 à l'extrémité opposée. Comme on le voit plus en détail sur la figure 3, l'organe excentrique 13 est composé d'un disque 131 logé dans un alésage ménagé dans la poutre 10 avec un axe de rotation 131 A.

Dans ce mode de réalisation, le disque est monté rotatif autour de l'unique axe de rotation 131A perpendiculaire à son plan. Ce disque peut aussi dans à une variante, telle que montrée sur les figures 7 à 9, être monté de manière à former une rotule.

Par ailleurs le disque est représenté comme étant plein ; cependant il peut avoir toute autre forme, il suffit qu'il soit logé dans un alésage ménagé dans la poutre 10.

Sur ce disque 131, on a monté un tourillon 133 d'axe 133A excentré par rapport à l'axe 131A, par l'intermédiaire d'un palier 134 formant une rotule et logé dans une cage 135. La surface externe du palier 134 est sphérique, permettant au tourillon 133 de pivoter et de s'incliner selon un certain angle par rapport au plan du disque 131. Le tourillon 133 traverse les deux branches de la chape 23 dans lesquelles il est supporté par des paliers 123. En fonctionnement, l'axe 131A peut tourner autour de l'axe 133A, et l'axe 133A peut tourner autour de l'axe 131A.

A l'opposé sur la poutre 10, l'axe 11 est monté tourillonnant dans la poutre et les deux branches de la chape 21. Avantageusement l'axe 11 est logé dans un palier 11R dont la surface extérieure est sphérique pour permettre à l'axe 11 de tourner sur lui-même autour de son axe de rotation 11A. L'axe de rotation 11A par la rotule peut s'incliner d'un certain angle par rapport au plan de la poutre 10.

On peut voir sur la figure 2 que la suspension comprend un moyen de liaison de la poutre à la structure 30 de l'avion formé également par un organe excentrique 43 d'un côté de la poutre et d'un axe 41 sur l'autre extrémité de la poutre 10.

L'organe excentrique 43 est formé d'un disque 431 monté dans un logement cylindrique d'axe 431A. Comme l'organe 13 il est ici monté rotatif autour du seul axe 431A mais dans une autre forme de réalisation il peut être monté rotulant. Le disque comprend un tourillon 433 d'axe 433A excentré par rapport à l'axe 431A. L'axe 433A tourne autour de l'axe de rotation 431A du disque 431.

Le tourillon 433 est supporté dans le disque 431 par un palier à surface extérieure sphérique 434 par l'intermédiaire d'une cage 435.

L'axe distant 41 comme l'axe distant 11 tourillonne à travers la chape 31 et est monté sur la poutre par l'intermédiaire d'un palier formant rotule 41R.

Afin de satisfaire aux contraintes de sécurité en cas de rupture partielle de pièce, la solution permet de mettre en place des organes de liaison en attente. Comme cela est apparent sur la figure 2. Un premier organe, 101, de liaison en attente est constitué par un tourillon qui est logé dans un alésage traversant une chape centrale 24 de la ferrure 20 et la poutre 10 avec un jeu déterminé. Pour la clarté du dessin le tourillon n'a pas été représenté. On voit seulement l'alésage 102 dans lequel il est logé. En fonctionnement normal, le tourillon n'est soumis à aucune charge en raison du jeu.

De la même façon, un deuxième et un troisième organes 105 et 107 de liaison en attente sont ménagés sur la ferrure 30 de la structure de l'avion. Les deux organes sont constitués de deux tourillons logés dans deux alésages 106 et 108 avec un jeu déterminé, de part et d'autre du plan vertical dans lequel l'organe 101 est situé, traversant la ferrure 30 et la poutre logée entre les deux branches de la chape. Les deux tourillons n'ont pas été représentés.

La figure 5 montre la poutre seule équipée de ses organes excentriques, 13 et 43, ainsi que des axes distants respectifs 11 et 41. Les tourillons 133, 433 et les axes 11 et 41 sont montés sur les disques respectivement la poutre, par l'intermédiaire de paliers à surface sphérique 134, 434, 41R et 11R pour former des rotules.

On décrit maintenant la position relative des pièces dans deux différentes phases de fonctionnement du moteur.

En figure 6A1 le moteur est froid, l'extrémité gauche de la suspension montre les deux excentriques 13 et 43 avec leur tourillons excentriques 133 et 433. Sur la figure 6A2, qui est la suspension vue de côté, la poutre est inclinée à gauche. Le basculement de la poutre permet de maintenir une liaison isostatique entre le carter 20 et la structure de l'avion 30 ; ce basculement est rendu possible par les deux rotules.

Sur la figure 6B1, qui correspond au cas où le moteur est très chaud, dans une phase transitoire de fonctionnement du moteur, l'excentrique 133 avec son tourillon a tourné pour s'adapter à la dilatation du carter 20. En même temps le moteur s'est allongé et cambré. La poutre occupe alors la position que l'on voit sur la figure 6B1. On observe que la ferrure 20 s'est décalée vers la gauche par rapport à la structure 30.

Le dispositif de sécurité fonctionne de la façon suivante.

Une rupture du tourillon 133 ou de l'axe 11 impose une rotation partielle autour de l'axe 11 ou du tourillon 133 respectivement, et la réduction du jeu dans l'organe de liaison en attente 101. Les efforts sont alors transmis par cette nouvelle liaison active.

Une rupture de l'axe 41 côté structure impose une rotation et la réduction du jeu dans l'organe de liaison en attente 107. La transmission des efforts passe par la nouvelle liaison active 107 et la liaison 433 non endommagée. La transmission est symétrique en cas de rupture au niveau de la liaison par l'organe excentrique 433.

L'invention ne se limite pas à ce mode de réalisation tel que décrit. Par exemple, on peut prévoir le montage avec rotule non pas sur le tourillon excentré mais sur le disque lui-même de l'organe excentrique.

On peut aussi, notamment si l'angle de basculement entre les deux positions extrêmes de la poutre n'est pas trop important, prévoir une double rotule pour l'organe excentrique.

On décrit maintenant un deuxième mode de réalisation d'une suspension incorporant des organes excentriques.

Il s'agit ici par exemple de la suspension avant d'un moteur à double flux. Comme on le voit sur les figures 7, 8 et 9, une pièce intermédiaire transversale en forme de poutre ou de porte manteau 1010 est solidaire de la structure de l'avion, un pylône par exemple non représenté, par des moyens de fixation appropriés. Ce premier élément 1010 est relié à un deuxième élément 1003, le carter intermédiaire par exemple, par un moyen de liaison constitué ici par un organe excentrique 1013 à chaque extrémité. L'organe 1013 est monté d'un côté sur l'élément 1010 et d'un autre côté sur l'élément 1003 par un tourillon que l'on n'a pas représenté pour une raison de clarté de figure. Le tourillon est monté sur les oreilles d'une chape 1023 appartenant au carter.

L'organe excentrique comprend un disque 1131 d'axe 1131A monté rotulant dans un alésage de l'élément 1010 par l'intermédiaire d'un palier à surface sphérique 1132 logé dans une cage 1136 solidaire de l'alésage. Sur ce disque 1131 est montée une rotule d'axe 1133A avec un palier sphérique 1134 logé dans une cage 1135 solidaire d'un alésage du disque 1131. Les deux axes 1131A et 1133A sont distincts. Le tourillon d'axe 1133A, qui n'a pas été représenté traverse les deux oreilles de la chape 1023.

Un tel excentrique peut comprendre un moyen tel qu'une rainure qui permet le démontage d'une noix de rotule pour la maintenance.

Cette disposition est équivalente à une liaison à biellettes dans la mesure où cette dernière est agencée pour ne transmettre les efforts que dans une seule direction. On retrouve cette propriété avec ce montage à excentriques. Le premier avantage par rapport aux biellettes est la compacité de la liaison. En outre, elle offre un gain en masse.

Ce mode de liaison permet d'absorber les variations dues aux dilatations thermiques et de rattraper les écarts dus aux tolérances de fabrication.

## Revendications

1. Suspension de moteur (1) à la structure (30) d'un avion, comportant au moins un moyen de liaison apte à lier un premier et un deuxième éléments tels qu'un carter du moteur et ladite structure, **caractérisée par le fait que** ledit moyen de liaison comprend un organe excentrique (13 ; 43 ; 1013) apte à être logé dans un alésage du premier élément, en étant rotatif autour d'un premier axe (131A; 431A; 1131A) l'organe excentrique comportant un tourillon (133 ; 433) apte à être rattaché au deuxième élément et d'axe (133A ; 433A ; 1133A) excentré par rapport au premier axe de rotation, l'organe excentrique étant rotatif autour dudit axe excentré.

2. Suspension selon la revendication 1 dont le premier ou deuxième élément peut être aussi une poutre ou toute autre pièce intermédiaire entre le carter et la structure.

3. Suspension selon la revendication 1 ou 2 dont l'organe excentrique est en forme de disque.

4. Suspension selon la revendication 3 dont le tourillon est monté sur le disque.

5. Suspension selon l'une des revendications 1 à 4 dont l'organe excentrique (1013) est monté dans son logement par le moyen d'un palier formant une rotule (1136).

6. Suspension selon l'une des revendications 1 à 5 dont le tourillon excentré est monté sur l'organe excentrique par le moyen d'un palier formant rotule (134 ; 434 ; 1034).

7. Suspension selon l'une des revendications 2 à 6 dont le premier élément est une poutre (10) entre le carter et la structure et le deuxième élément est une ferrure (20) du carter, le moyen de liaison comprenant au moins un organe excentrique (13) et un axe (11) distant dudit organe excentrique tourillonnant entre la poutre (10) et la ferrure (20) du carter.

8. Suspension selon l'une des revendications 2 à 6 dont le premier élément est une poutre entre le carter et la structure et le deuxième élément est une ferrure du carter, le moyen de liaison comprenant au moins un premier et un deuxième organes excentriques.

9. Suspension selon l'une des revendications 2 à 6 dont le premier élément est une poutre (10) entre le carter et la structure (30) et le deuxième élément ladite structure (30), le moyen de liaison comprenant un organe excentrique de structure (43) et un axe (41) distant dudit organe excentrique de structure tourillonnant entre la poutre (10) et la structure (30).

10. Suspension selon l'une des revendications 2 à 6 dont le premier élément est une poutre entre le carter et la structure et le deuxième élément est la structure, le moyen de liaison à la structure de l'avion comprenant au moins un premier et un deuxième organes excentriques de structure.

11. Suspension comprenant un moyen de liaison selon l'une des revendications 7 et 8 entre le carter (20) et la poutre (10) et un moyen de liaison selon l'une des revendications 9 et 10 entre la poutre (10) et la structure (30).

12. Suspension selon l'une des revendications 2 à 6 dont le premier élément est une pièce intermédiaire (1010) disposée transversalement entre le carter et la structure de l'avion, et le deuxième élément une ferrure (1003) solidaire du carter, le moyen de liaison comprenant un organe excentrique (1013) disposé à chaque extrémité transversale de ladite pièce intermédiaire (1010).

13. Suspension selon l'une des revendications 7 à 11 dont au moins l'un desdits axes distants (11 ;41) est monté dans son logement par le moyen d'un palier formant rotule (11R; 41R).

14. Suspension selon l'une des revendications précédentes comprenant au moins un organe de liaison en attente (101) entre un premier et un deuxième élément.

15. Suspension selon les revendication 2 et 13 dont le premier élément est la poutre et le deuxième élément est la structure, un deuxième et un troisième organes (105 ; 107) de liaison en attente étant placés entre la poutre (10) et la structure (30) de l'avion et disposés chacun de part et d'autre du plan vertical médian.

16. Suspension selon l'une des revendications 13 à 14 dont au moins un organe de liaison en attente (101 ; 105 ; 107) est formé par un tourillon logé dans un alésage avec un jeu déterminé.

17. Suspension selon l'une des revendications précédentes dont au moins l'un des axes (11 ;41) ou tourillons (133 ; 433) est monté dans son palier en étant mobile axialement.

## Claims

1. Engine mount (1) for an aircraft structure (30), comprising at least one connection means adapted to link a first and a second elements such as an engine case and said structure, **characterized by** the fact that said connection means comprises an eccentric member (13; 43; 1013) adapted to be housed in a bore of the first element, being rotational about a first axis (131A; 431A; 1131A), the eccentric member comprising a trunnion (133;433) adapted to be attached to the second element and having an axis (133A; 433A; 1133A) off-centred with respect to the first axis of rotation, the eccentric member being rotational about said off-centred axis.

2. Mount as in claim 1, whose first or second element may also be a beam or any other intermediate part between the case and the structure.

3. Mount as in claim 1 or 2, whose eccentric member is in the form of a disc.

4. Mount as in claim 3, whose trunnion is mounted on the disc.

5. Mount as in any of claims 1 to 4 whose eccentric member (1013) is mounted in its housing by means of a bearing forming a ball-joint (1136).

6. Mount as in any of claims 1 to 5, whose off-centred trunnion and is mounted on the eccentric member by a bearing means forming a ball-joint (134; 434; 1034).

7. Mount as in any of claims 2 to 6, whose first element is a beam (10) between the case and the structure, and the second element is an annular frame (20) of the case, the connection means comprising at least one eccentric member (13) and a pin (11) distant from said eccentric member swivelling between the beam (10) and the annular frame (20) of the case.

8. Mount as in any of claims 2 to 6 whose first element is a beam between the case and the structure, and the second element is an annular frame of the case, the connection means comprising at least one first and one second eccentric members.

9. Mount as in any of claims 2 to 6 whose first element is a beam (10) between the case and the structure (30), and the second element is said structure (30), the connection means comprising a structural eccentric member (43) and a pin (41) distant from said structural eccentric member swivelling between the beam (10) and the structure (30).

10. Mount as in any of claims 2 to 6 whose first element is a beam between the case and the structure, and the second element is the structure, the connection means to the aircraft structure comprising at least one first and one second structural eccentric members.

11. Mount comprising a connection means as in either of claims 7 and 8 between the case (20) and the beam (10) and a connection means as in either of claims 9 and 10 between the beam (10) and the structure (30).

12. Mount as in any of claims 2 to 6 whose first element is an intermediate part (1010) arranged crosswise between the case and the aircraft structure, and the second element is an annular frame (1003) integral with the case, the connection means comprising an eccentric member (1013) arranged at each transverse end of said intermediate part (1010).

13. Mount as in either of claims 7 to 11 in which at least one of said distant pins (11; 41) is mounted in its housing by the bearing means forming a ball-joint (11R; 41R).

14. Mount as in any preceding claims comprising at least one standby connection member (101) between said first and said second element.

15. Mount as in claims 2 and 13 whose first element is the beam and the second element is the structure, a second and a third standby connection members (105;107) being positioned between the beam (10) and the aircraft structure (30) and each arranged either side of the median vertical plane.

16. Mount as in either of claims 13 and 14 of which at least one standby connection member (101; 105; 107) is formed by a trunnion housed in a bore with a set clearance.

17. Mount as in either of any preceding claims of which at least one of the pins (11; 41) or trunnions (133; 433) is mounted in its bearing and is axially mobile.

## Patentansprüche

1. Motoraufhängung (1) an der Struktur (30) eines Flugzeugs, umfassend mindestens ein Verbindungsmittel, das dazu geeignet ist, ein erstes und ein zweites Element zu verbinden, wie etwa ein Gehäuse des Motors und die Struktur, **dadurch gekennzeichnet, dass** das Verbindungsmittel ein exzentrisches Organ (13; 43; 1013) umfasst, das dazu geeignet ist, um in einer Bohrung des ersten Elements aufgenommen zu werden, indem es um eine erste Achse (131A; 431A; 1131A) drehbar ist, wobei das exzentrische Organ einen Drehzapfen (133; 433) umfasst, der dazu geeignet ist, an dem zweiten Element mit einer im Verhältnis zu der ersten Drehachse außermittigen Achse (133A; 433A; 1133A) befestigt zu werden, wobei das exzentrische Organ um die außermittige Achse drehbar ist.

2. Aufhängung nach Anspruch 1, wobei das erste oder zweite Element auch ein Träger oder ein anderes Zwischenstück zwischen dem Gehäuse und der Struktur sein kann.

3. Aufhängung nach Anspruch 1 oder 2, wobei das exzentrische Organ scheibenförmig ist.

4. Aufhängung nach Anspruch 3, wobei der Drehzapfen auf der Scheibe montiert ist.

5. Aufhängung nach einem der Ansprüche 1 bis 4, wobei das exzentrische Organ (1013) in seiner Aufnahme mittels eines Lagers montiert ist, das ein Kugelgelenk (1136) bildet.

6. Aufhängung nach einem der Ansprüche 1 bis 5, wobei der außermittige Drehzapfen auf dem exzentrischen Organ mittels eines Lagers montiert ist, das ein Kugelgelenk (134; 434; 1034) bildet.

7. Aufhängung nach einem der Ansprüche 2 bis 6, wobei das erste Element ein Träger (10) zwischen dem Gehäuse und der Struktur und das zweite Element ein Beschlag (20) des Gehäuses ist, wobei das Verbindungsmittel mindestens ein exzentrisches Organ (13) und eine Achse (11) umfasst, die von dem exzentrischen Organ entfernt ist, das zwischen dem Träger (10) und dem Beschlag (20) des Gehäuses drehbar gelagert ist.

8. Aufhängung nach einem der Ansprüche 2 bis 6, wobei das erste Element ein Träger zwischen dem Gehäuse und der Struktur und das zweite Element ein Beschlag des Gehäuses ist, wobei das Verbindungsmittel mindestens ein erstes und ein zweites exzentrisches Organ umfasst.

9. Aufhängung nach einem der Ansprüche 2 bis 6, wobei das erste Element ein Träger (10) zwischen dem Gehäuse und der Struktur (30) und das zweite Element die Struktur (30) ist, wobei das Verbindungsmittel mindestens ein exzentrisches Strukturorgan (43) und eine Achse (41) umfasst, die von dem exzentrischen Strukturorgan entfernt ist, das zwischen dem Träger (10) und der Struktur (30) drehbar gelagert ist.

10. Aufhängung nach einem der Ansprüche 2 bis 6, wobei das erste Element ein Träger zwischen dem Gehäuse und der Struktur und das zweite Element die Struktur ist, wobei das Verbindungsmittel an der Flugzeugstruktur mindestens ein erstes und ein zweites exzentrisches Strukturorgan umfasst.

11. Aufhängung, umfassend ein Verbindungsmittel nach einem der Ansprüche 7 und 8 zwischen dem Gehäuse (20) und dem Träger (10) und ein Verbindungsmittel nach einem der Ansprüche 9 und 10 zwischen dem Träger (10) und der Struktur (30).

12. Aufhängung nach einem der Ansprüche 2 bis 6, wobei das erste Element ein Zwischenstück (1010) ist, das quer zwischen dem Gehäuse und der Struktur des Flugzeugs angeordnet ist, und das zweite Element ein Beschlag (1003) ist, der mit dem Gehäuse fest verbunden ist, wobei das Verbindungsmittel ein exzentrisches Organ (1013) umfasst, das an jedem Querende des Zwischenstücks (1010) angeordnet ist.

13. Aufhängung nach einem der Ansprüche 7 bis 11, wobei mindestens eine der entfernten Achsen (11; 41) in ihrer Aufnahme mittels eines Lagers montiert ist, das ein Kugelgelenk (11R; 41R) bildet.

14. Aufhängung nach einem der vorhergehenden Ansprüche, umfassend mindestens ein Bereitschaftsverbindungsorgan (101) zwischen einem ersten und einem zweiten Element.

15. Aufhängung nach Anspruch 2 und 13, wobei das erste Element der Träger und das zweite Element die Struktur ist, wobei ein zweites und ein drittes Bereitschaftsverbindungsorgan (105; 107) zwischen dem Träger (10) und der Struktur (30) des Flugzeugs platziert sind und jeweils auf beiden Seiten der mittleren senkrechten Ebene angeordnet sind.

16. Aufhängung nach einem der Ansprüche 13 bis 14, wobei mindestens ein Bereitschaftsverbindungsorgan (101; 105; 107) durch einen Drehzapfen gebildet wird, der in einer Bohrung mit einem bestimmten Spiel aufgenommen ist.

17. Aufhängung nach einem der vorhergehenden Ansprüche, wobei mindestens eine der Achsen (11; 41) oder Drehzapfen (133; 433) in ihrem bzw. seinem Lager axial beweglich montiert ist.
